# EUROPÄISCHE PATENTSCHRIFT

(11) **EP 0 364 692 B1**
(45) Veröffentlichungstag und Bekanntmachung des Hinweises auf die Patenterteilung: **01.12.1993**
(21) Anmeldenummer: 89115165.6
(22) Anmeldetag: 17.08.1989
(51) Int. Cl.: B60R 9/058

(54) **Dachlastträger für ein Kraftfahrzeug**
Roof rack for a motor vehicle
Porte-bagages pour le toit d'un véhicule automobile

(30) Priorität: 28.09.1988 DE 3832867
(43) Veröffentlichungstag der Anmeldung: 25.04.1990
(73) Patentinhaber: Adam Opel Aktiengesellschaft, 65428 Rüsselsheim (DE)
(72) Erfinder: Hürter, Helmut, Dipl.-Ing. (FH), D-6080 Gross-Gerau (DE); Feuchter, Heinrich, Ing., D-6097 Trebur (DE)
(74) Vertreter: Bergerin, Ralf, Dipl.-Ing.

(56) Entgegenhaltungen:
- EP-A- 0 129 524
- EP-A- 0 205 414
- EP-A- 0 278 435
- DE-U- 8 633 382

## Beschreibung

Die Erfindung betrifft einen Dachlastträger für ein Kraftfahrzeug, dessen Dach nach oben offene Türspalte aufweist, bestehend aus Tragstäben, aus in die Türspalte einsetzbaren Stützfüßen, die zur Aufnahme der Tragstäbe dienen und die auf Stützflächen, insbesondere Schweißflansche, aufruhen und aus Spannteilen, mit denen die Stützfüße am Fahrzeugdach festgespannt werden, wobei an jedem Stützfuß ein durch einen Schlitz im Stützfuß hindurchragender Spannhebel angeordnet ist, der über ein unter Federwirkung stehendes Zwischenstück mit einer durch ein Fenster des Stützfußes hindurchgreifenden, schwenkbaren Spannplatte verbunden ist.

Bei einem bekannten Dachlastträger umgreift das Spannteil des Stützfußes ein im Dachbereich des Kraftfahrzeuges angebrachtes, fahrzeugfestes Halteteil (DE-A-29 33 718). Das Halteteil ist als Haken ausgebildet und an einer bei geschlossener Tür verdeckten Stelle des Dachbereiches im Türspalt angeordnet. Der Haken wird von einem Bügel des Spannteils hintergriffen, der an einer am Stützfuß drehbar gelagerten Spannlasche angebracht ist. Haken und Bügel sind bei geschlossener Fahrzeugtür nicht zugänglich, so daß eine wirksame Diebstahlsicherung vorhanden ist.

Ein weiterer Dachlastträger nach DE-U-86 33 382 verbindet den Tragarm mit dem jeweiligen Stützfuß mit einer Schraube, wobei eine Arretierzunge, die mit dem Schloß korrespondiert, diese in Geschlossenstellung abdeckt. An jedem Stützfuß ist ein Spannhebel angeordnet, der durch einen Schlitz des Stützfußes hindurchragt und über ein unter Federwirkung stehendes Zwischenstück mit einer schwenkbaren Spannplatte verbunden ist.

Aufgabe der Erfindung ist es, den bekannten Stützfuß weiter zu verbessern, um seine Handhabung beim Aufsetzen und beim Abbau des Dachlastträgers zu erleichtern und zu vereinfachen. Dies wird gemäß der Erfindung auf vorteilhafte Weise dadurch erreicht, daß die schwenkbare Spannplatte mindestens einen in eine am Fahrzeugdach befestigte Buchse eingreifenden Zapfen trägt.

Der erfindungsgemäße Stützfuß läßt sich leicht am Fahrzeugdach befestigen und durch den Gewindezapfen und die mit Innengewinde versehene Nietmutter ist ein sicherer Halt am Fahrzeugdach gewährleistet. Durch die günstigen Abmessungen der Dachlastbefestigung im Türspalt ist der Platzbedarf hinter der benachbarten Türabdichtung so gering, daß die Türabdichtung in ihrer Gestaltung spaltfrei am Dachrahmen des Fahrzeuges anliegen kann, und so das Aussehen und das Windgeräuschverhalten verbessert wird.

Seitliche Abstützflächen bildende Abwinklungen am Stützfuß verhindern, daß sich der Dachlastträger samt Dachlast bei einem Unfall vom Fahrzeugdach löst. Eine Überlappung der Spannplatte im Bereich des unteren Randes des Durchtrittsfensters der Abstützplatte des Stützfußes verhindert ein Nach-Außen-Rutschen des Stützfußes. Winkelhebel am Spannhebel des Stützfußes drücken die Spannplatte beim Hochschwenken des Spannhebels nach außen, damit der Zapfen der Spannplatte aus der Nietmutter herausgeschwenkt wird. Eine Verlängerungslasche am Spannhebel greift bei geschlossenem Spannhebel in den Türspalt ein und bildet so eine vorteilhafte Diebstahlsicherung. Eine Durchblicköffnung in der Spannplatte ermöglicht eine optische Kontrolle, ob der Zapfen in die Nietmutter eingreift.

Weitere Merkmale und Vorteile der Erfindung können aus der Zeichnung und der zugehörigen Zeichnungsbeschreibung entnommen werden. In der Zeichnung ist ein Ausführungsbeispiel gemäß der Erfindung dargestellt, und zwar zeigt:
- Fig. 1: einen Längsschnitt durch einen Stützfuß mit eingesetztem Tragstab, wobei sich der Spannhebel des Stützfußes in Schließstellung befindet,

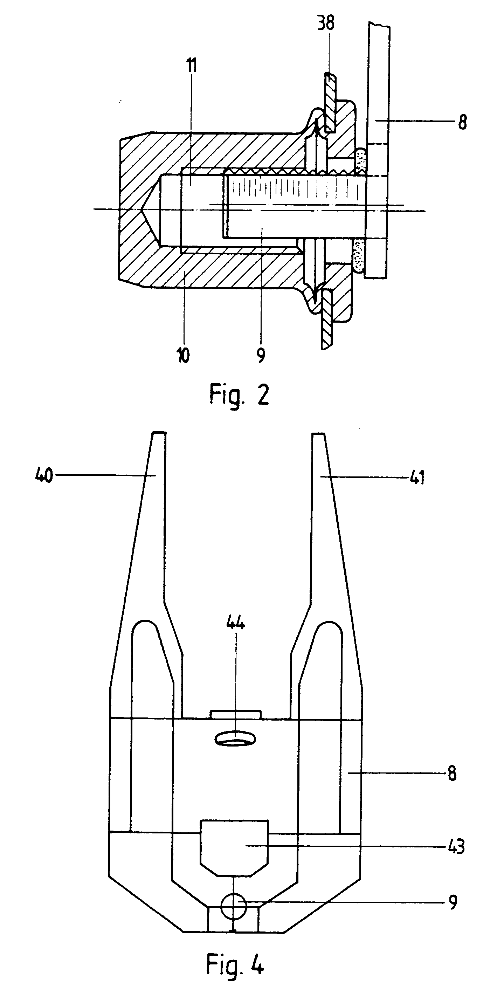

- Fig. 2: einen Ausschnitt aus Fig. 1 mit Nietmutter und Zapfen,
- Fig. 3: den Stützfuß nach Fig. 1 mit geöffnetem Spannhebel,
- Fig. 4: eine Draufsicht auf die Spannplatte mit Zapfen,
- Fig. 5: die Rückseite des unteren Teils des Stützfußes und
- Fig. 6: den Stützfuß nach Fig. 5 mit eingesetzter Spannplatte.

Am Stützfuß 1 ist mittels einer Schraube 2 und eines Klemmbügels 3 der rohrförmige Tragstab 4 befestigt. Im Innenbereich des U-förmigen Querschnitt aufweisenden Stützfußes 1 ist die Spannvorrichtung 5 angeordnet, die aus dem Spannhebel 6, dem Zwischenstück 7 und der Spannplatte 8 mit Zapfen 9 besteht. Der Zapfen 9 greift zum Festhalten des Stützfußes 1 am Fahrzeugdach in eine Nietmutter 10 ein und sein Durchmesser ist kleiner als der Innendurchmesser der Nietmutter 10. Sowohl der Zapfen 9 als auch die Bohrung 11 der am Fahrzeugdach befestigten Nietmutter 10 sind mit Gewinde versehen, so daß bei geschlossenem Spannhebel beide Gewinde ineinandergreifen und der Zapfen 9 nicht aus der Nietmutter 10 herausrutschen kann. Um Nietmutter 10 und Zapfen 9 mit gleichem Gewinde versehen zu können, wird ein Teil der unteren Hälfte des Zapfens 9 samt Gewinde abgeschliffen, damit der Zapfen 9 ohne Schraubbewegung in die Nietmutter 10 hineinpaßt.

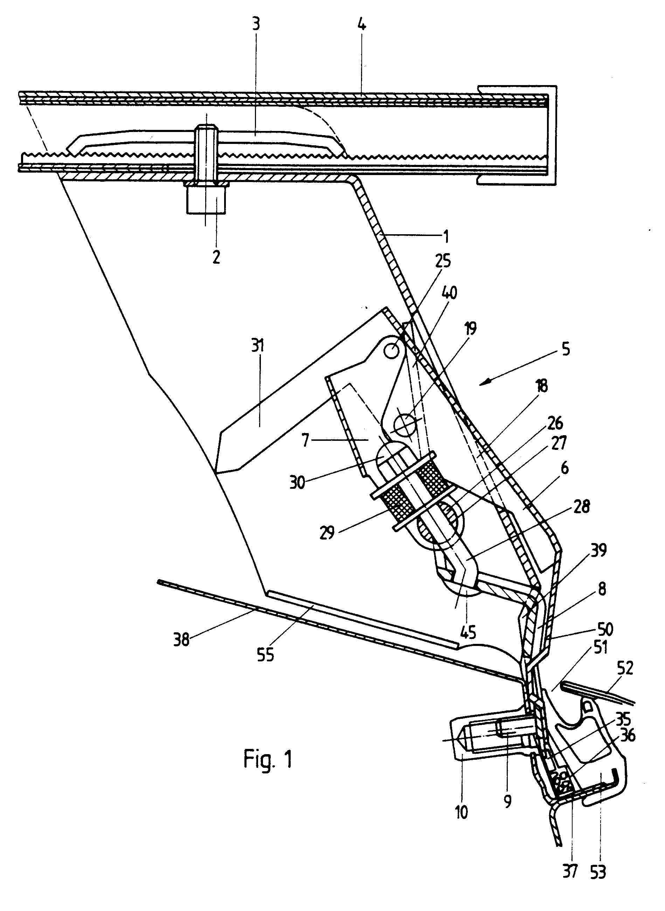

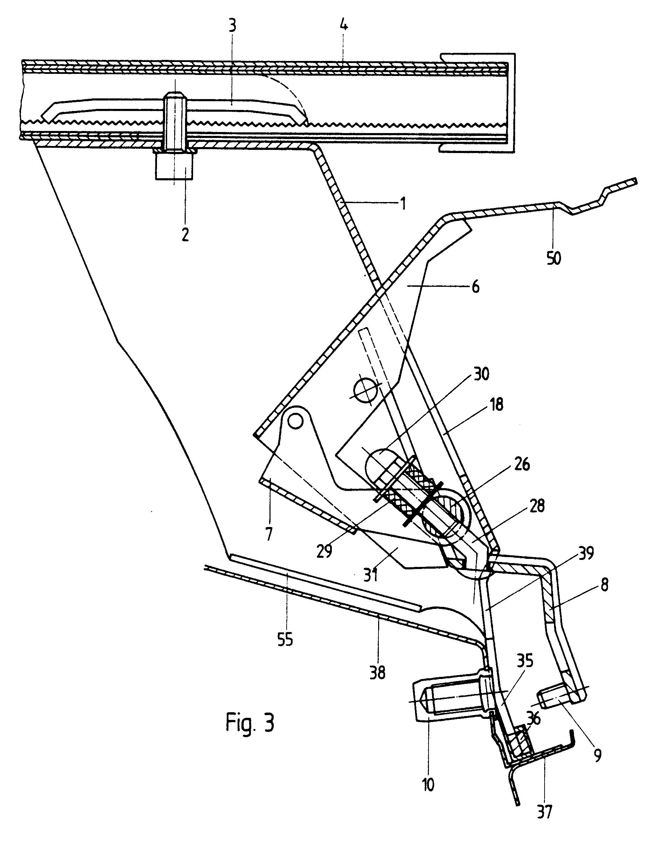

Der durch den Schlitz 18 des Stützfußes 1 hindurchragende Spannhebel 6 ist auf einer Achse 19 schwenkbar gelagert, die in Bohrungen 20 und 21 in den beiden seitlichen Schenkeln 22 und 23 des Stützfußes 1 eingesetzt ist. Das Zwischenstück 7 ist bei 25 schwenkbar am Spannhebel 6 gelagert und besitzt am unteren Ende eine Achse 26, die mit einer Bohrung 27 versehen ist. Durch die Bohrung 27 ist ein mit Gewinde versehener, abgekröpfter Bolzen 28 gesteckt, der an der Spannplatte 8 befestigt ist. Auf dem Bolzen 28 ist ein elastisches Pufferelement 29 aufgesetzt, das durch eine Mutter 30 gegen die Achse 26 verspannt ist. Das den Bolzen 28 umschließende Pufferelement 29 übt daher in der Stellung des Spannhebels 6 nach Fig. 1 eine Federkraft auf die Spannplatte 8 aus. Der Spannhebel 6 besitzt an seinem oberen Ende zwei Winkelhebel 31, die sich beim Hochschwenken des Spannhebels 6 an die Spannplatte 8 anlegen und diese nach außen drücken, damit der Zapfen 9 aus der Nietmutter 10 herausgeschwenkt wird.

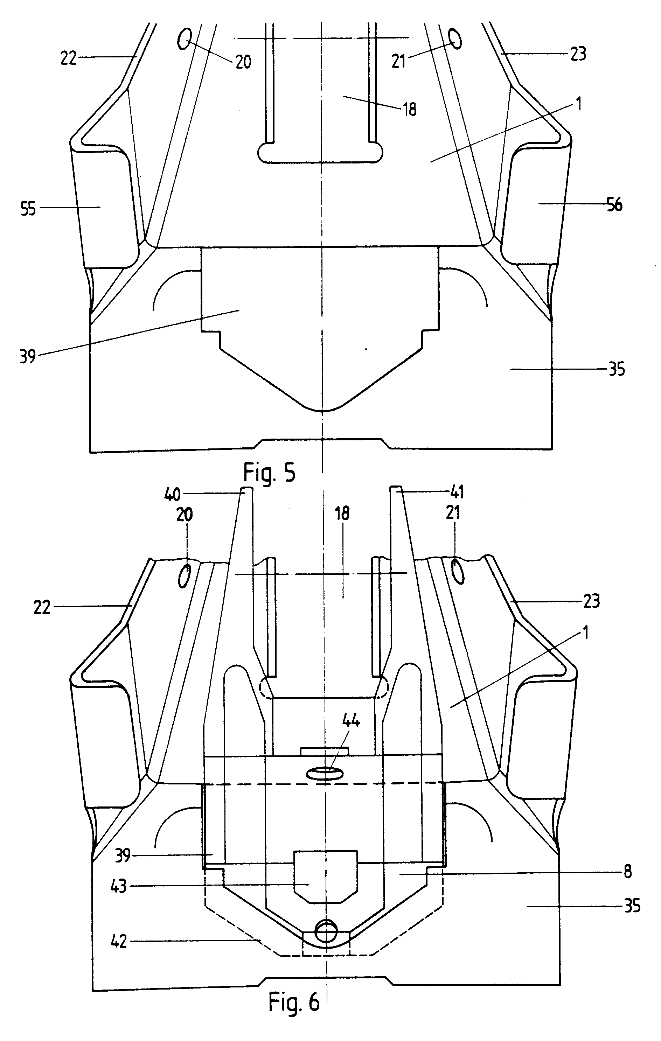

Der Stützfuß 1 weist an seinem unteren Ende eine Abstützplatte 35 auf, deren untere Kante von elastischem Material 36 umschlossen ist, das auf dem Schweißflansch 37 des Fahrzeugdaches 38 aufsitzt und Lackbeschädigungen verhindert. In der Abstützplatte 35 ist ein Fenster 39 vorgesehen, durch das die abgewinkelte Spannplatte 8 hindurchragt. Die Spannplatte 8 hat an ihrem oberen Ende zwei Zungen 40 und 41, die an der Achse 19 des Spannhebels 6 entlanggleiten und zum Führen der Spannplatte 8 beim Öffnen und Schließen des Spannhebels 6 dienen. An ihrem unteren Ende überlappt die Spannplatte 8 die Abstützplatte 35 im Bereich des Fensters 39, was in Fig. 6 durch die gestrichelte Linie 42 angedeutet wird. Durch diese Überlappung soll ein Nach-Außen-Rutschen des Stützfußes 1 verhindert werden. Eine Durchblicköffnung 43 in der Spannplatte 8 im Bereich des Zapfens 9 ermöglicht eine optische Kontrolle, ob der Zapfen 9 richtig in die Nietmutter 10 eingreift. Durch die Bohrung 44 in der Spannplatte 8 wird der Bolzen 28 gesteckt, dessen Kopfstück 45 durch das Pufferelement 29 gegen die Spannplatte 8 gedrückt wird.

Zur Diebstahlsicherung ist am Spannhebel 6 eine Lasche 50 vorgesehen, die in den Türspalt 51 eingreift und bei geschlossener Fahrzeugtür 52 durch den Türrahmen und die Türdichtung 53 abgedeckt wird, so daß sie nicht aus dem Türspalt 51 herausgeschwenkt werden kann und so den Spannhebel 6 blockiert.

An den seitlichen Schenkeln 22 und 23 des Stützfußes 1 befinden sich Abwinklungen 55 und 56, die bei einem Unfall auf das Fahrzeugdach 38 gedrückt werden und ein Lösen des Dachlastträgers samt Dachlast vom Fahrzeugdach verhindern.

Wird der Spannhebel 6 aus der Stellung nach Fig. 1 in die Stellung nach Fig. 3 hochgeschwenkt, dann drückt das Zwischenstück 7 über die Achse 26, das Pufferelement 29 und den Bolzen 28 die Spannplatte 8 seitlich nach unten bis die Enden der Winkelhebel 31 des Spannhebels 6 die Spannplatte 8 berühren und diese dann so weit vom Stützfuß 1 wegschieben, daß der Zapfen 9 aus der am Fahrzeugdach befestigten Nietmutter 19 heraustritt. Dabei wird das Pufferelement 29 entspannt und die beiden Zungen 40 und 41 der Spannplatte 8 gleiten auf der Achse 19 des Spannhebels 6 entlang. Wenn der Spannhebel die Stellung nach Fig. 3 erreicht hat, kann der Dachlastträger vom Fahrzeugdach entfernt werden. Beim Herunterschwenken des Spannhebels 6 aus der Stellung nach Fig. 3 in die Stellung nach Fig. 1 zieht das Zwischenstück 7 über die Achse 26, das Pufferelement 29 und den Bolzen 28 die Spannplatte 8 seitlich nach oben. Sobald die Spannplatte 8 am Fahrzeugdach 38 anliegt, wird das elastische Pufferelement 29 zusammengedrückt, so daß eine Federkraft auf die Spannplatte 8 wirkt und dafür sorgt, daß der Zapfen 9 sicher in der Nietmutter 10 gehalten wird und beim Fahren keine Klappergeräusche entstehen können.

Der oben beschriebene und in der Zeichnung dargestellte Stützfuß stellt lediglich eine Ausführungsform der Erfindung dar. Die Erfindung ist jedoch keineswegs auf diese Ausführungsform beschränkt, denn es gibt mannigfaltige Abwandlungsmöglichkeiten in der Gestaltung der Einzelteile des Stützfußes und in deren Anordnung, ohne daß dabei der Rahmen der Erfindung verlassen wird. So können beispielsweise statt nur eines Zapfens 9 zwei oder mehrere Zapfen an der Spannplatte 8 und dementsprechend auch zwei oder mehrere Nietmuttern 10 am Fahrzeugdach 38 vorgesehen sein.

## Patentansprüche

1. Dachlastträger für ein Kraftfahrzeug, dessen Dach nach oben offene Türspalte (51) aufweist, bestehend aus Tragstäben (4), aus in die Türspalte (51) einsetzbaren Stützfüßen (1), die zur Aufnahme der Tragstäbe (4) dienen und die auf Stützflächen, insbesondere Schweißflansche (37), aufruhen und aus Spannteilen (5), mit denen die Stützfüße (1) am Fahrzeugdach festgespannt werden, wobei an jedem Stützfuß (1) ein durch einen Schlitz (18) im Stützfuß (1) hindurchragender Spannhebel (6) angeordnet ist, der über ein unter Federwirkung stehendes Zwischenstück (7) mit einer durch ein Fenster (39) des Stützfußes (1) hindurchgreifenden, schwenkbaren Spannplatte (8) verbunden ist, dadurch gekennzeichnet, daß die schwenkbare Spannplatte (8) mindestens einen in eine am Fahrzeugdach (38) befestigte Buchse (10) eingreifenden Zapfen (9) trägt.

2. Dachlastträger nach Anspruch 1, **dadurch gekennzeichnet,** daß die am Fahrzeugdach (38) im Türspalt (51) an verdeckter Stelle befestigte Buchse als Nietmutter (10) ausgebildet ist und der Durchmesser des in die Nietmutter (10) eingreifenden Zapfens (9) kleiner ist als der Innendurchmesser der Nietmutter (10) und daß der Zapfen (9) Gewindegänge aufweist, die in das Innengewinde der Nietmutter (10) eingreifen.

3. Dachlastträger nach Anspruch 1 oder 2, **dadurch gekennzeichnet,** daß Zapfen (9) und Nietmutter (10) gleiches Gewinde aufweisen und der untere Teil des Zapfens samt Gewinde weggeschliffen ist, so daß der Zapfen (9) in die Nietmutter (10) eingeschwenkt werden kann und beide Gewinde sich ineinander verhaken.

4. Dachlastträger nach Anspruch 1 bis 3, **dadurch gekennzeichnet,** daß das Zwischenstück (7) am Spannhebel (6) schwenkbar gelagert und an seinem der Spannplatte (8) zugewandten Ende von einer Achse (26) mit einer Bohrung (27) durchsetzt ist, durch die ein an der Spannplatte (8) befestigter, abgekröpfter Bolzen (28) gesteckt ist, dessen von der Spannplatte (8) abgewandtes Ende durch ein Pufferelement (29) hindurchragt und mit einem Gewinde für eine Mutter (30) zum Fixieren des Pufferelementes (29) versehen ist.

5. Dachlastträger nach Anspruch 1 bis 4, **dadurch gekennzeichnet,** daß der Stützfuß (1) U-förmigen Querschnitt hat und die beiden seitlichen Schenkel (22, 23) des Stützfußes (1) an ihren dem Fahrzeugdach (38) zugewandten Enden seitliche Abstützflächen bildende Abwinklungen (55, 56) aufweisen, die bei einem Unfall verhindern, daß sich der Dachlastträger samt Dachlast vom Fahrzeugdach (38) löst.

6. Dachlastträger nach Anspruch 1 bis 5, **dadurch gekennzeichnet,** daß der Stützfuß (1) an seinem unteren Ende eine über die seitlichen Schenkel (22, 23) des Stützfußes (1) hinausragende Abstützplatte (35) mit einem Fenster (39) zum Durchtritt der Spannplatte (8) aufweist.

7. Dachlastträger nach Anspruch 1 bis 6, **dadurch gekennzeichnet,** daß die Spannplatte (8) den unteren Rand des Durchtrittsfensters (39) in der Abstützplatte (35) seitlich überlappt (bei 42), um ein Nach-Außen-Rutschen des Stützfußes (1) zu verhindern.

8. Dachlastträger nach Anspruch 1 bis 7, **dadurch gekennzeichnet,** daß in der Spannplatte (8) eine Durchblicköffnung (43) vorgesehen ist, um das Eingreifen des Zapfens (9) der Spannplatte (8) in die Nietmutter (10) des Fahrzeugdaches (38) überprüfen zu können.

9. Dachlastträger nach Anspruch 1 bis 8, **dadurch gekennzeichnet,** daß der Spannhebel (6) durch einen Schlitz (18) im Stützfuß (1) hindurchragt und auf einer im Stützfuß (1) angebrachten Achse (19) schwenkbar gelagert ist.

10. Dachlastträger nach Anspruch 1 bis 9, **dadurch gekennzeichnet,** daß der Spannhebel (6) an seinem oberen Ende Winkelhebel (31) aufweist, die sich beim Hochschwenken des Spannhebels (6) an die Spannplatte (8) anlegen und diese nach außen drücken.

11. Dachlastträger nach Anspruch 1 bis 10, **dadurch gekennzeichnet,** daß der Spannhebel (6) nach unten durch eine Lasche (50) verlängert ist, die in Schließstellung des Spannhebels (6) hinter dem Türfensterrahmen liegt und bei abgeschlossener Fahrzeugtür (52) eine Diebstahlsicherung bildet.

## Claims

1. Roof luggage support for a motor vehicle whose roof has a door guttering (51) which is open at the top, comprising support struts (4), support feet (1) for receiving the support struts (4) and which support feet (1) rest on support surfaces, especially welding flanges (37), and clamping parts (5) through which the support feet (1) are clamped to the vehicle roof, wherein through a slot (18) in each support foot (1) extends a clamping lever (6) which is connected to a pivotable clamping plate (8) which through an intermediate piece (7) under the action of a spring penetrates an aperture (39) of the support foot (1), **characterised** in that the pivotable clamping plate (8) supports at least one pin (9) engaging a bush (10) secured to the vehicle roof (38).

2. Roof load support according to claim 1, **characterised** in that the bush secured at a concealed spot in the door guttering (51) of the vehicle roof (38) is constructed as a rivet nut (10) and the diameter of the pin (9) engaging the rivet nut (10) is smaller than the internal diameter of the rivet nut (10) and that the pin (9) has threads which engage with the internal threads of the rivet nut (10).

3. Roof load support according to claim 1 or 2, **characterised** in that the pin (9) and the rivet nut (10) have the same thread and the lower part of the pin including the thread is removed by grinding, so that the pin (9) can be retracted into the rivet nut (10) and both threads become entwined with each other.

4. Roof load support according to claim 1 to 3, **characterised** in that the intermediate piece (7) is pivotally mounted on the clamping lever (6) and at its end facing the clamping plate (8) is penetrated by an shaft (26) with a bore (27) through which is passed an offset bolt (28) which is secured to the clamping plate (8), the end of the bolt (28) facing away from the clamping plate (8) penetrates a buffer element (29) and is provided with a thread for a nut (30) for fixing the buffer element (29).

5. Roof load support according to claim 1 to 4, **characterised** in that the support foot (1) has a U-shaped cross-section and the ends of the two lateral arms (22, 23) of the support foot (1) facing the vehicle roof (38) have bent edges (55, 56) forming lateral supporting surfaces which in the event of an accident prevent the roof load support including the roof load from becoming detached from the vehicle roof (38).

6. Roof load support according to claim 1 to 5, **characterised** in that the lower end of the support foot (1) has a support plate (35), projecting over the lateral arms (22, 23) of the support foot (1), with an aperture (39) for allowing through the clamping plate (8).

7. Roof load support according to claim 1 to 6, **characterised** in that the clamping plate (8) at (42) laterally overlaps the lower edge of the aperture (39) in the support plate (35), in order to prevent the support foot (1) from sliding outwards.

8. Roof load support according to claim 1 to 7, **characterised** in that the clamping plate (8) is provided with a viewing hole (43) in order to be able to check that the pin (9) of the clamping plate (8) has engaged the rivet nut (10) of the vehicle roof (38).

9. Roof load support according to claim 1 to 8, **characterised** in that the clamping lever (6) penetrates a slot (18) in the support foot (1) and is pivotally mounted on an shaft (19) arranged in the support foot (1).

10. Roof load support according to claim 1 to 9, **characterised** in that the upper end of the clamping lever (6) has rectangular levers (31) which, as the clamping lever (6) swings upwards, rest against the clamping plate (8) and push it outwards.

11. Roof load support according to claim 1 to 10, **characterised** in that the clamping lever (6) is extended downwards by a bracket (50) which in the closure position of the clamping lever (6) is situated behind the door-window frame and forms an anti-theft device when the vehicle door (52) is closed.

## Revendications

1. Porte-charges de toit pour un véhicule automobile dont le toit présente des espaces (51) entre portière et carrosserie ouverts vers le haut, porte-charges comprenant des barres porteuses (4), des pieds-supports (1) qui s'engagent dans l'espace (51) entre portière et carrosserie, sont destinés à recevoir les barres porteuses (4) et reposent sur des surfaces d'appui, notamment des bords soudés (37), ainsi que des éléments de tension (5) au moyen desquels les pieds sont bloqués sur le toit du véhicule, un levier de tension (6) qui fait saillie par une fente (18) dans le pied-support (1) étant disposé sur chaque pied-support (1), lequel levier, par un élément intermédiaire (7) soumis à l'action de ressorts, est lié à une plaque de tension (8) pivotante qui passe par une ouverture (39) du pied-support (1), caractérisé par le fait que la plaque (8) pivotante porte au moins un axe (9) qui s'engage dans une douille (10) fixée sur le toit (38) du véhicule.

2. Porte-charges de toit selon la revendication 1, caractérisé par le fait que la douille qui est fixée sur le toit (38) du véhicule, dans l'espace (51) entre portière et carrosserie, en un endroit masqué, est agencée sous forme d'écrou à river (10), par le fait que le diamètre de l'axe (9) qui pénètre dans l'écrou à river (10) est inférieur au diamètre intérieur dudit écrou à river (10) et par le fait que l'axe (9) présente des filets qui s'engagent dans le filetage intérieur de l'écrou à river (10).

3. Porte-charges de toit selon la revendication 1 ou 2, caractérisé par le fait que l'axe (9) et l'écrou à river (10) présentent le même filetage et la partie inférieure de l'axe avec son filetage est meulée de telle sorte que l'axe (9) puisse pénétrer par pivotement dans l'écrou à river (10) et que les deux filetages s'engagent l'un dans l'autre.

4. Porte-charges de toit selon les revendications 1 à 3, caractérisé par le fait que l'élément intermédiaire (7) est monté pivotant sur le levier de tension (6) et, à son extrémité tournée vers la plaque de tension (8), est traversé par axe (26) pourvu d'un trou (27), dans lequel est emmanché un axe (28) coudé fixé sur la plaque de tension (8), dont l'extrémité éloignée de la plaque de tension (8) traverse un élément élastique (29) et porte un filetage qui reçoit un écrou (30) de fixation de l'élément élastique (29).

5. Porte-charges de toit selon les revendications 1 à 4, caractérisé par le fait que le pied-support (1) a une section en U et que les deux jambes (22, 23) latérales du pied-support (1), à leur extrémité tournée vers le toit (38) du véhicule, présentent des parties coudées (55, 56) formant des surfaces d'appui latérales qui, en cas d'accident, empêchent que le porte-charges de toit se détache avec sa charge du toit (38) du véhicule.

6. Porte-charges de toit selon les revendications 1 à 5, caractérisé par le fait que le pied-support (1), à son extrémité inférieure, présente une plaque d'appui (35) qui s'étend au-delà des jambes (22, 23) latérales du pied-support (1) et comporte une ouverture (39) pour le passage de plaque de tension (8).

7. Porte-charges de toit selon les revendications 1 à 6, caractérisé par le fait que la plaque de tension (8) recouvre latéralement (en 42) le bord inférieur de l'ouverture de passage (39) dans la plaque d'appui (35) aux fins d'empêcher un glissement vers l'extérieur du pied-support (1).

8. Porte-charges de toit selon les revendications 1 à 7, caractérisé par le fait qu'il est prévu dans la plaque de tension (8) une fenêtre (43) permettant de contrôler la pénétration de l'axe (9) de la plaque de tension (8) dans l'écrou à river (10) du toit de véhicule (38).

9. Porte-charges de toit selon les revendications 1 à 8, caractérisé par le fait que le levier de tension (6) passe par une fente (18) dans le pied-support (1) et est monté pivotant sur un axe (19) fixé sur le pied-support (1).

10. Porte-charges de toit selon les revendications 1 à 9, caractérisé par le fait que le levier de tension (6), à son extrémité supérieure, présente des levier coudés (31) qui, lors du pivotement vers le haut du levier de tension (6), viennent en appui sur la plaque de tension (8) et repoussent celle-ci en direction de l'extérieur.

11. Porte-charges de toit selon les revendications 1 à 10, caractérisé par le fait que le levier de tension se prolonge vers le bas par une patte (50) qui, lorsque le levier de tension (6) est en position de fermeture, est située derrière le cadre de la fenêtre de portière et constitue une sécurité contre le vol lorsque la portière (52) du véhicule est fermée.
